# EUROPÄISCHE PATENTSCHRIFT

(11) **EP 1 819 551 B1**
(45) Veröffentlichungstag und Bekanntmachung des Hinweises auf die Patenterteilung: **02.05.2018**
(21) Anmeldenummer: 04803576.0
(22) Anmeldetag: 07.12.2004
(51) Int. Cl.: B60R 16/02, H04L 12/24, H04L 12/40

(54) **VERFAHREN ZUR STRUKTURIERTEN SPEICHERUNG VON FEHLEREINTRÄGEN**
METHOD FOR THE STRUCTURED STORAGE OF ERROR ENTRIES
PROCÉDÉ DE MISE EN MÉMOIRE STRUCTURÉE D'ENREGISTREMENTS DE DÉFAILLANCES

(43) Veröffentlichungstag der Anmeldung: 22.08.2007
(73) Patentinhaber: Bayerische Motoren Werke Aktiengesellschaft, 80809 München (DE)
(72) Erfinder: WANNER, Peter, 85591 Vaterstetten (DE); FREISTADT, Alois, 80807 München (DE)
(86) Internationale Anmeldenummer: PCT/EP2004/013884
(87) Internationale Veröffentlichungsnummer: WO 2006/061033

(56) Entgegenhaltungen:
- WO-A-03/013065
- US-A- 4 809 177
- US-A- 5 325 082
- US-A1- 2004 223 461

## Beschreibung

Die Erfindung betrifft ein Verfahren zur strukturierten Speicherung von Fehlereinträgen der Teilnehmer eines Datenbusses in einem Kraftfahrzeug.

Typische Teilnehmer eines Datenbusses, insbesondere Steuergeräte in einem Kraftfahrzeug, besitzen die Fähigkeit, Fehler des eigenen Betriebs und/oder Fehler des Ausgangsverhaltens, z. B. des Sendeverhaltens, anderer Teilnehmer des Datenbusses zu erkennen.

Im Fall des Erkennens eines Fehlers bei einem Teilnehmer eines Datenbusses ist es heute üblich, dass der den Fehler erkennende Teilnehmer, ggf. nach der Überprüfung zusätzlicher Kriterien, einen Fehlereintrag in einen Fehlerspeicher veranlasst.

Ein in einem der Teilnehmer auftretender Fehler wird häufig erstmals durch eine Warnanzeige des Fahrzeugs oder dadurch offenkundig, dass der Fahrer bemerkt, dass eine Funktion des Fahrzeugs, etwa eine Funktion zur automatischen Abstandsregelung, beeinträchtigt ist. Der Fahrer des Fahrzeugs wendet sich in beiden Fällen typischerweise an eine Service-Werkstatt. Zur Fehlersuche werden dort über ein Diagnosesystem Fehlereinträge aus Fehlerspeichern der im Kraftfahrzeug vorhandenen Steuergeräte ausgelesen. Abhängig von den ausgelesenen Fehlereinträgen werden daraufhin entsprechende Service-, Reparatur- oder Austauschmaßnahmen vorgenommen.

In modernen Kraftfahrzeugen sind typischerweise mehrere Dutzend Steuergeräte enthalten. Das Auslesen der Fehlerspeicher jedes einzelnen dieser Steuergeräte und die Auswertung der dabei anfallenden großen Menge von Diagnosedaten wäre äußerst arbeits- und zeitaufwändig. Deshalb wird mit der Fehlersuche typischerweise bei einem Teilnehmer begonnen, der gemäß äußerer Anzeichen, einer vorliegenden Dokumentation und/oder der Fachkenntnis des Service-Fachmanns an der Funktion beteiligt ist. Dies erfordert das Vorliegen einer ständig aktualisierten Dokumentation und/oder die Fähigkeit des Service-Fachmanns, eine Zuordnung zwischen einer ausgefallenen oder beeinträchtigten Funktion eines Kraftfahrzeugs und einem oder mehreren im Kraftfahrzeug verbauten Steuergerät vorzunehmen. Aufgrund der komplizierten informationstechnischen Vernetzung der Teilnehmer eines Datenbusses in modernen Kraftfahrzeugen, aufgrund wechselnder Fahrzeugkonfigurationen und aufgrund der Vielzahl unterschiedlicher Fahrzeugtypen und -baureihen kann diese Zuordnung durch den Service-Fachmann jedoch nicht immer fehlerfrei geleistet werden. Das Ergebnis kann eine lang andauernde und/oder erfolglose Fehlersuche sein.

Als Alternative zur verteilten Speicherung von Fehlereinträgen in mehreren Steuergeräten ist es bekannt, Fehlereinträge in einem zentralen Fehlerspeicher vorzunehmen. Die zentrale und vollständige Speicherung der Fehler eines verteilten Systems in einem einzigen Teilnehmer ist jedoch mit einem hohen Strukturierungsaufwand verbunden und birgt den Nachteil, dass in dem zentralen Fehlerspeicher ein große Datenmenge zu verwalten und bei der Fehlersuche auszuwerten ist.

Als weitere Alternative ist es bekannt, für ein und denselben Fehler jeweils einen Eintrag bei verschiedenen Teilnehmern vorzunehmen, welche an einer durch den Fehler beeinträchtigten Funktion beteiligt sind. Dadurch wird für den Service-Fachmann die Wahrscheinlichkeit erhöht, bei der Fehlersuche einen passenden Fehlereintrag zu finden. Allerdings erfordert diese Vorgehensweise von dem Service-Fachmann eine genaue Kenntnis darüber, welche Teilnehmer an der jeweiligen Funktion beteiligt sind. Außerdem wird durch die redundante Speicherung die gesamte im System zu verwaltende Datenmenge drastisch erhöht. Dadurch wird nicht nur unnötig hoher Speicherplatzbedarf verursacht, sondern auch eine eventuelle zentrale Auswertung der Fehlereinträge mehrerer Teilnehmer erschwert.

US 2004/0223461 A1 offenbart ein verteiltes System zum Steuern eines Kommunikationsnetzwerks, das eine Mehrzahl von Bereichen von verbundenen Netzwerkelementen aufweist. Fehlerobjekte können in Datenbanken der jeweiligen Bereiche gespeichert werden und an andere Netzwerkelemente in einem lokalen Bereich weitergegeben werden, wenn der ursprüngliche Fehler andere Netzwerkelemente als das, in welchem der Fehler ursprünglich aufgetreten ist, beeinflusst.

Aufgabe der Erfindung ist es, ein einfaches Verfahren zur strukturierten Speicherung von Fehlereinträgen der Teilnehmer eines Datenbusses in einem Kraftfahrzeug zu schaffen, durch welches Fehlereinträge im Fehlerfall zuverlässig auffindbar sind.

Die Aufgabe wird erfindungsgemäß gelöst durch ein Verfahren, in welchem beim Auftreten eines Fehlers eine von dem Fehler möglicherweise beeinflusste Funktion und die Mitglieder einer zugehörigen funktionsspezifische Gruppe diagnoserelevanter Teilnehmer bestimmt werden, bei einem ersten Mitglied der funktionsspezifischen Gruppe ein Fehlereintrag erstellt wird und bei einem zweiten Mitglied der funktionsspezifischen Gruppe ein auf das erste Mitglied verweisender Diagnosezeiger abgelegt wird.

Der wesentliche Vorteil eines erfindungsgemäßen Verfahrens liegt darin, dass ein Fehlereintrag nur bei einem, z. B. dem obigen ersten, oder wenigen Mitgliedern der Gruppe tatsächlich vorgenommen werden muss, dass ein Fehlereintrag aber von mindestens einem anderen, z. B. dem obigen zweiten, Mitglied derselben funktionsspezifischen Gruppe aus über entsprechende Diagnosezeiger einfach und zuverlässig aufgefunden werden kann.

Das Erstellen eines Diagnosezeigers anstatt eines vollständigen Fehlereintrags bei dem zweiten Mitglied ist dabei mit einem sehr geringen Speicherplatzbedarf verbunden. Die Reduktion der Gesamtzahl tatsächlicher Fehlereinträge gegenüber einer redundanten Fehlerspeicherung gemäß dem
Stand der Technik vereinfacht eine eventuelle zentrale Auswertung der Fehlereinträge mehrerer Teilnehmer bzw. Mitglieder.

Vom Konzept eines einzigen zentralen Fehlerspeichers für das gesamte Fahrzeug unterscheidet sich ein erfindungsgemäßes Verfahren unter anderem darin, dass für jede Fahrzeugfunktion zumindest ein Fehlerspeicher definiert wird. Dabei kann der Fehlerspeicher eines Teilnehmers für mehrere Funktionen zuständig sein. Aufgrund des hohen Spezialisierungsgrads der meisten Steuergeräte entfällt dabei aber auf jeden Teilnehmer mit Fehlerspeicher nur ein Bruchteil aller Fahrzeugfunktionen. Die Auswertung eines solchen Fehlerspeichers ist daher weit weniger aufwändig als die eines einzigen zentralen Fehlerspeichers.

Ein erfindungsgemäßes Verfahren beinhaltet die Zuordnung der Teilnehmer zu funktionsspezifischen, d. h. auf Funktionen des Fahrzeugs bezogenen, Gruppen. Ein Teilnehmer kann dabei mehreren funktionsspezifischen Gruppen zugeordnet werden. Die Zuordnung als Mitglied zu einer funktionsspezifischen Gruppe kann herstellerseitig oder nachträglich durch einen oder mehrere entsprechende Speichereinträge erfolgen.

Die Zuordnung kann absolut und/oder relativ erfolgen. Bei einer absoluten Zuordnung sind zumindest einem Mitglied einer Gruppe in zumindest einem Betriebszustand sämtliche Mitglieder der Gruppe bekannt, beispielsweise durch deren ID. Von einem solchen Mitglied aus können im Fehlerfall Fehlernachrichten an alle übrigen Mitglieder der Gruppe verteilt werden. Bei einer relativen Zuordnung sind allen oder den jeweils relevanten Mitgliedern einer Gruppe nur einzelne Mitglieder der Gruppe bekannt, z. B. die jeweils hierarchisch über- und/oder untergeordneten Mitglieder. Die Teilnehmer sind in diesem Fall weniger der Gruppe selbst als vielmehr den bekannten Gruppenmitgliedern zugeordnet. Die gesamte Gruppe ergibt sich aus einer Verknüpfung der einzelnen Zuordnungen.

Gemäß bevorzugter Ausführungsformen der Erfindung erfolgt die Bestimmung der Mitglieder der funktionsspezifischen Gruppe dementsprechend entweder in einem Arbeitsgang absolut oder schrittweise relativ. Bei relativer Bestimmung muss auch im Verlauf der Bestimmung nicht notwendigerweise ein Mitglied zur Kenntnis aller Mitglieder gelangen. Zur Lösung der der Erfindung zugrundeliegenden Aufgabe genügt das schrittweise Einbeziehen der Mitglieder der funktionsspezifischen Gruppe in ein erfindungsgemäßes Verfahren.

Eine funktionsspezifische Gruppe setzt sich erfindungsgemäß aus allen als diagnoserelevant erachteten Teilnehmern zusammen. Unter diagnoserelevanten Teilnehmern sind dabei zunächst alle Teilnehmer zu verstehen, die an einer durch den Fehler beeinträchtigten Funktion beteiligt sind.

Gemäß einer vorteilhaften Weiterbildung der Erfindung wird jedoch zusätzlich zumindest ein solcher Teilnehmer als diagnoserelevant verstanden und der jeweiligen funktionsspezifischen Gruppe als Mitglied zugeordnet, der in der aktuellen Konfiguration des Kraftfahrzeugs nicht an der die funktionsspezifische Gruppe begründenden Funktion beteiligt ist. Dies kann insbesondere dann vorteilhaft sein, wenn ein solcher Teilnehmer in einer früheren Konfiguration des Kraftfahrzeugs an derselben oder einer ähnlichen Funktion beteiligt war oder in einem anderen Kraftfahrzeugtyp an derselben oder einer ähnlichen Funktion beteiligt ist. Grundsätzlich kann die Zuordnung zu den funktionsspezifischen Gruppen basierend auf der Fragestellung vorgenommen werden, ob ein Service-Fachmann es theoretisch, z. B. aus seinen Erfahrungen mit früheren Fahrzeugkonfigurationen heraus, für sinnvoll erachten könnte, einen Teilnehmer in die Fehlersuche miteinzubeziehen.

Gemäß einer bevorzugten Ausführungsform der Erfindung wird, ggf. nach Prüfung zusätzlicher Bedingungen, ein Fehlereintrag bei dem Mitglied erstellt, bei welchem ein Fehler erkannt wird. Alternativ kann aber auch, ggf. nach Prüfung zusätzlicher Bedingungen, ein Fehlereintrag bei einem anderen Mitglied derselben funktionsspezifischen Gruppe vorgenommen werden, z. B. beim hierarchisch nächsthöheren oder höchstgestellten Teilnehmer. Diese Ausführungsform eignet sich insbesondere zur Kombination mit einem in einer begleitenden Anmeldung der Anmelderin beschriebenen Verfahren zum Erstellen von Fehlereinträgen. Denkbar sind sogar Fehlereinträge bei Teilnehmern, die nicht Mitglied der jeweiligen funktionsspezifischen Gruppe sind.

Teilnehmer, bei welchen ein Diagnosezeiger erstellt werden soll, werden zu dessen Erstellung erfindungsgemäß im Fehlerfall durch eine Fehlernachricht aufgefordert. Gemäß einer bevorzugten Ausführungsform der Erfindung wird zu diesem Zweck von einem ersten Mitglied einer funktionsspezifischen Gruppe, bei welchem ein Fehlereintrag erstellt wurde, eine Fehlernachricht an ein zweites Mitglied ausgegeben und beim zweiten Mitglied wird auf die Fehlernachricht des ersten Mitglieds hin ein Diagnosezeiger erstellt. Der Diagnosezeiger beim zweiten Mitglied ist somit nicht unabhängig von einem Fehler dauerhaft vorhanden, sondern kann bei der Fehlersuche als Indikator für einen tatsächlichen Fehlereintrag bei einem der Mitglieder gewertet werden. Der Diagnosezeiger enthält zumindest diejenigen Daten, die erforderlich sind, um auf ein anderes Mitglied, im einfachsten Fall ein Mitglied mit Fehlereintrag zu verweisen. Ggf. kann der Diagnosezeiger mit weiteren bei der Fehlersuche hilfreichen oder zur schnellen Informationsrückmeldung geeigneten Daten angereichert werden. Diese Daten können zuvor ganz oder teilweise über Fehlernachrichten an das Mitglied, bei welchem der Diagnosezeiger erstellt wird, übergeben werden und/oder durch eine beim jeweiligen Mitglied erfolgende Informationsverarbeitung, ggf. unter Einbezug lokaler Daten, errechnet werden.

Diagnosezeiger können direkt oder miteinander verknüpft auf einen Teilnehmer mit Fehlereintrag verweisen. Wenn also bei einem ersten Mitglied einer funktionsspezifischen Gruppe ein Fehlereintrag besteht, auf den der Diagnosezeiger eines zweiten Mitglieds verweist, kann ein Verweis von einem dritten Mitglied auf das erste Mitglied realisiert werden, indem bei dem dritten Mitglied ein Diagnosezeiger auf das erste Mitglied erstellt wird und/oder indem bei dem dritten Mitglied ein auf das zweite Mitglied verweisender Diagnosezeiger erstellt wird, der mit dem Diagnosezeiger des zweiten Mitglieds kaskadierbar ist.

Eine solche, hier zweistufig beschriebene, kaskadische Verknüpfung von Diagnosezeigern kann in analoger Vorgehensweise ebenso in drei oder mehr Stufen erstellt werden. Insbesondere kann es vorteilhaft sein, wenn der kaskadierte Verweis der Diagnosezeiger auf einen oder mehrere Teilnehmer mit Fehlerspeicher, hier auf das erste Mitglied der Gruppe, gemäß einer herstellerseitig festgelegten oder durch die Funktion der Teilnehmer bedingten oder durch die Datenbus-Anbindung der Teilnehmer bedingten Hierarchie der Teilnehmer erfolgt.

Ebenso wie der Verweis der Diagnosezeiger kann die Ausgabe von Fehlernachrichten und die Erstellung der Diagnosezeiger in umgekehrter Richtung kaskadiert werden. Im oben beschriebenen Beispiel wird hierzu von dem zweiten Mitglied nach dem Empfang der Fehlernachricht des ersten Mitglieds eine Fehlernachricht an das dritte Mitglied ausgegeben und der Diagnosezeiger des dritten Mitglieds wird auf die Fehlernachricht des zweiten Mitglieds hin erstellt.

Gemäß einer besonders vorteilhaften Ausführungsform eines erfindungsgemäßen Verfahrens wird bei sämtlichen Mitgliedern einer funktionsspezifischen Gruppe entweder ein Fehlereintrag oder ein, ggf. kaskadiert, auf ein Mitglied mit Fehlereintrag verweisender Diagnosezeiger erstellt. Dadurch ist das Auffinden eines Fehlereintrags ausgehend von einem beliebigen einer funktionsspezifischen Gruppe zugeordneten Teilnehmer gewährleistet.

Hierzu ist jedoch sicherzustellen, dass sämtliche einer funktionsspezifischen Gruppe zugeordneten Teilnehmer bei der Verteilung von Fehlernachrichten erreicht werden. Erfindungsgemäß wird dies gewährleistet durch Speichereinträge der Teilnehmer, welche der Zuordnung zu einer funktionsspezifischen Gruppe dienen, und/oder Inhalte der Fehlernachrichten, welche Information zur weiteren Verteilung von Fehlernachrichten enthalten.

Die Verteilung von Fehlernachrichten kann weitgehend unabhängig von der eigentlichen Fehlerspeicherung erfolgen. Es muss lediglich sichergestellt sein, dass für die Teilnehmer, welche eine Fehlernachricht erhalten, bekannt ist, auf welchen Teilnehmer ein zu erstellender Diagnosezeiger verweisen soll. Beispielsweise kann die Verteilung von Fehlernachrichten bei einem einen Fehler erkennenden Teilnehmer oder bei einem Teilnehmer beginnen, bei welchem ein Fehlereintrag vorgenommen wird. Alternativ kann zunächst ein Teilnehmer, von welchem aus die Fehlernachrichten später verteilt werden, über den Speicherort einer Fehlernachricht informiert werden oder selbst über den Speicherort entscheiden.

Die erfindungsgemäß erreichte Verknüpfung der Mitglieder einer Gruppe kann so ausgebildet sein, dass für einen erkannten Fehler ein einziger Fehlereintrag vorgenommen und eine Vielzahl von Diagnosezeigern erstellt wird. Alternativ kann beispielsweise zur Verringerung der Verknüpfungstiefe zu einem einzigen Fehler bei mehr als einem Teilnehmer ein Fehlereintrag vorgenommen werden. Die Diagnosezeiger der anderen der Gruppe zugeordneten Teilnehmer verweisen dann direkt oder kaskadiert auf einen der Fehlereinträge.

Erfindungsgemäß wird beim Auftreten eines Fehlers eine von dem Fehler möglicherweise beeinflusste Funktion bestimmt. In vielen Fällen kann anhand der Identität des erkennenden Teilnehmers oder der Kenntnis der Fehlerquelle eindeutig eine einzige möglicherweise beeinflusste Funktion bestimmt werden. Sofern keine eindeutige Bestimmung möglich ist und/oder mehrere Funktionen beeinflusst sein könnten, wird ein erfindungsgemäßes Verfahren gemäß einer Weiterbildung der Erfindung auf die funktionsspezifischen Gruppen diagnoserelevanter Teilnehmer aller möglicherweise beeinflussten Funktionen angewandt. Gegebenenfalls können dabei Redundanzen vermieden werden, indem die Vereinigungsmenge der einzelnen funktionsspezifischen Gruppen als neue für die jeweilige Kombination von Funktionen spezifische Gruppe diagnoserelevanter Teilnehmer definiert wird.

Weitere Einzelheiten der Erfindung ergeben sich aus der nachstehenden Beschreibung und den beigefügten Zeichnungen, durch welche zwei bevorzugte Ausführungsformen der Erfindung beispielhaft veranschaulicht werden. In den Zeichnungen zeigen
- Fig. 1: schematisch einen Datenbus mit mehreren Teilnehmern in einem Kraftfahrzeug,
- Fig. 2: den Informationsfluss zwischen den Teilnehmern gemäß einer ersten Ausführungsform eines erfindungsgemäßen Verfahrens zur strukturierten Speicherung von Fehlereinträgen und
- Fig. 3: den Informationsfluss zwischen den Teilnehmern gemäß einer zweiten Ausführungsform eines erfindungsgemäßen Verfahrens zur strukturierten Speicherung von Fehlereinträgen.

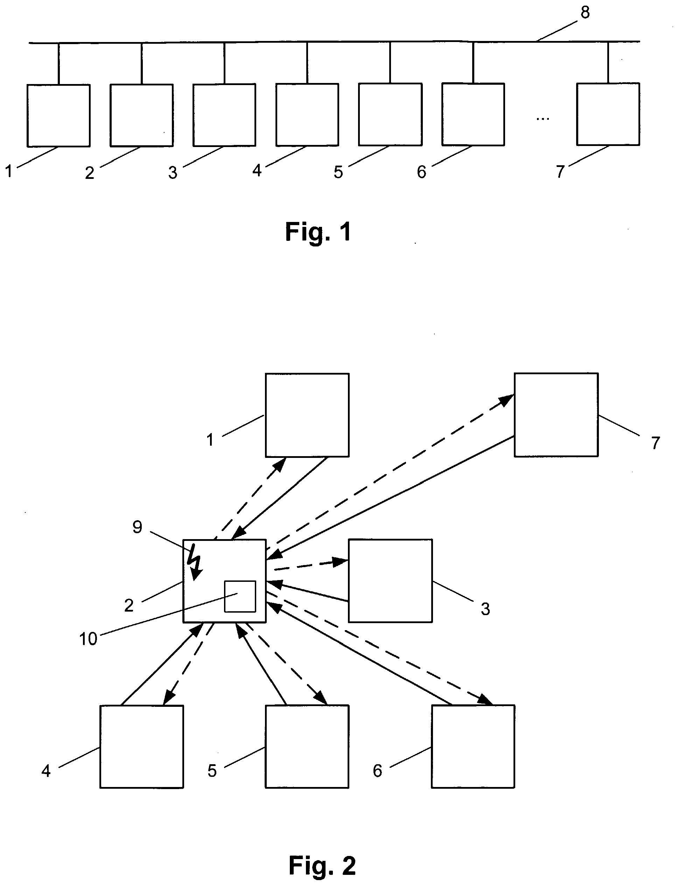

Ein Datenbus 8 mit mehreren Teilnehmern 1, 2, 3, 4, 5, 6, 7 in einem Kraftfahrzeug ist schematisch in Fig. 1 dargestellt.

Zu einer Funktion eines Kraftfahrzeugs, beispielsweise einer automatischen Abstandsregelung, tragen unter anderem die folgenden Teilnehmer bei:
- Die Teilnehmer 4, 5 und 6 tragen auf niedriger hierarchischer Ebene, z. B. als Sensoren, zu der Funktion bei.
- Der Teilnehmer 2, z. B. ein Steuergerät zur Ausführung von low-level Regelungsaufgaben, ist den Teilnehmern 4 und 5 funktionsbedingt hierarchisch übergeordnet.
- Der Teilnehmer 3, z. B. ebenfalls ein Steuergerät zur Ausführung von low-level Regelungsaufgaben, ist dem Teilnehmer 6 funktionsbedingt hierarchisch übergeordnet.
- Der Teilnehmer 1, z. B. ein Steuergerät zur Ausführung von high-level Regelungsaufgaben, ist den Teilnehmern 2 und 3 funktionsbedingt hierarchisch übergeordnet.

Die Teilnehmer 1, 2, 3, 4, 5 und 6 werden ihrer funktionalen Verknüpfung entsprechend einer für die automatische Abstandsregelung spezifischen Gruppe von Teilnehmern zugeordnet. Dieser Gruppe wird ebenso der Teilnehmer 7 zugeordnet, welcher in der aktuellen Fahrzeugkonfiguration nicht an der betreffenden Funktion beteiligt ist, in einer früheren Fahrzeugkonfiguration aber an einer ähnlichen Funktion beteiligt war. Der Teilnehmer 7 wird der funktionsspezifischen Gruppe deshalb zugeordnet, da ein mit der früheren Fahrzeugkonfiguration vertrauter Service-Fachmann den Teilnehmer 7 unter Umständen in eine auf die Funktion "automatische Abstandsregelung" bezogene Fehlersuche miteinbeziehen würde.

Bei beiden im Folgenden beschriebenen Ausführungsformen der Erfindung wird vorausgesetzt, dass ein Fehler 9 durch Teilnehmer 2 erkannt wird.

Fig. 2 stellt den Informationsfluss zwischen den Teilnehmern gemäß einer ersten Ausführungsform eines erfindungsgemäßen Verfahrens zur strukturierten Speicherung von Fehlereinträgen dar. Gemäß dieser ersten Ausführungsform besitzt Teilnehmer 2 einen eigenen Fehlerspeicher 10 und speichert den erkannten Fehler 9 dort selbsttätig als Fehlereintrag ab.
Aufgrund herstellerseitig vorgenommener Speichereinträge ist bei Teilnehmer 2 bekannt, dass ein Fehler der festgestellten Art die Funktion "automatische Abstandsregelung" unter Umständen sicherheitskritisch beeinflusst. Anhand dieses Speichereintrags erfolgt die erfindungsgemäße Bestimmung der von dem Fehler möglicherweise beeinflussten Funktion "automatische Abstandsregelung". Zudem sind die Adressen sämtlicher Mitglieder der zur Funktion "automatische Abstandsregelung" gehörigen funktionsspezifischen Gruppe absolut bei Teilnehmer 2 abgelegt. Die Bestimmung der Mitglieder der zugehörigen funktionsspezifischen Gruppe erfolgt anhand dieser Einträge somit vollständig bei Teilnehmer 2.

Der Teilnehmer 2 sendet daraufhin Fehlernachrichten an sämtliche übrigen Mitglieder der funktionsspezifischen Gruppe, d.h. an die Teilnehmer 1, 3, 4, 5, 6 und 7. In Fig. 2 kennzeichnen Strichpfeile die versendeten Fehlernachrichten.

Auf den Erhalt der jeweiligen Fehlernachricht hin wird bei jedem der übrigen Mitglieder der Gruppe, d. h. bei den Teilnehmern 1, 3, 4, 5, 6 und 7, ein direkt auf den Teilnehmer 2 gerichteter Diagnosezeiger erstellt. In Fig. 2 sind die Diagnosezeiger als durchgezogene Pfeile dargestellt.

Im Falle einer späteren Fehlersuche ist beim Auslesen des Fehlerspeichers 10 des Teilnehmers 2 ein entsprechender Fehlereintrag vorhanden. Beim Auslesen oder dem Versuch des Auslesens eines Fehlerspeichers der Teilnehmer 1, 3, 4, 5, 6 und 7, also aller übrigen Mitglieder der durch die Funktion "automatische Abstandsregelung" begründeten funktionsspezifischen Gruppe wird durch einen Diagnosezeiger auf den Teilnehmer 2 verwiesen. Das schnelle und unkomplizierte Auffinden des Fehlereintrags bei Teilnehmer 2 wird somit unabhängig vom Startpunkt der Fehlersuche gewährleistet.

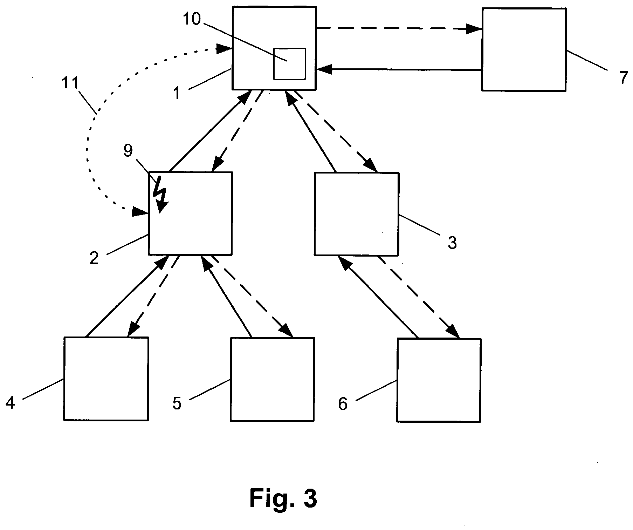

Fig. 3 stellt den Informationsfluss zwischen den Teilnehmern gemäß einer zweiten Ausführungsform eines erfindungsgemäßen Verfahrens zur strukturierten Speicherung von Fehlereinträgen dar. Wieder tritt bei Teilnehmer 2 zunächst ein Fehler 9 auf. Ein zugehöriger Fehlereintrag wird nun aber im Gegensatz zur ersten Ausführungsform nicht lokal bei Teilnehmer 2 vorgenommen, sondern es wird ein Fehlereintrag 10 bei einem anderen Teilnehmer vorgenommen, in diesem Fall dem hierarchisch übergeordneten Teilnehmer 1. Den diesbezüglichen Dialog zwischen den Teilnehmern 1 und 2 kennzeichnet der gepunktete Doppelpfeil 11 in Fig. 3. Gegebenenfalls ist das Vornehmen des Fehlereintrags 10 an zusätzliche Bedingungen geknüpft. Je nach Art des Dialogs 11 können einzelne Nachrichten der im Folgenden beschriebenen Kommunikation durch den Dialog 11 vorweggenommen sein und bei der späteren Verteilung von Fehlernachrichten entfallen.

Aufgrund herstellerseitig vorgenommener Speichereinträge und/oder einer Fehlerbeschreibung des Teilnehmers 2 und/oder der Kenntnis des Teilnehmers 2 als Fehlerquelle ist bei Teilnehmer 1 bekannt, dass ein Fehler der festgestellten Art die Funktion "automatische Abstandsregelung" unter Umständen sicherheitskritisch beeinflusst. Anhand dieser Kenntnis erfolgt die erfindungsgemäße Bestimmung der von dem Fehler möglicherweise beeinflussten Funktion "automatische Abstandsregelung".

Zudem sind bei Teilnehmer 1 abgelegt die Adressen der auf der nächsttieferen hierarchischen Stufe angeordneten Mitglieder der zur Funktion "automatische Abstandsregelung" gehörigen funktionsspezifischen Gruppe und die Adressen der unbeteiligten Mitglieder. In diesem Fall sind dies die auf der nächsttieferen hierarchischen Stufe angeordneten Teilnehmer 2 und 3 sowie der unbeteiligte Teilnehmer 7. Die Bestimmung der Mitglieder der funktionsspezifischen Gruppe erfolgt anhand dieser Einträge also nur teilweise bei Teilnehmer 1.

Teilnehmer 1 versendet Fehlernachrichten an die bei ihm bekannten Mitglieder der funktionsspezifischen Gruppe, d. h. an die Teilnehmer 2, 3 und 7. Diese erstellen daraufhin jeweils einen auf den Teilnehmer 1 gerichteten Diagnosezeiger. Auch in Fig. 3 kennzeichnen Strichpfeile die versendeten Fehlernachrichten, Diagnosezeiger sind als durchgezogene Pfeile dargestellt.

Die Verteilung von Fehlernachrichten an die übrigen Mitglieder der funktionsspezifischen Gruppe erfolgt kaskadiert. Bei den Teilnehmern 2 und 3 sind jeweils die Adressen der den einzelnen Teilnehmern auf der nächsttieferen hierarchischen Stufe untergeordneten Mitglieder der zur Funktion "automatische Abstandsregelung" gehörigen funktionsspezifischen Gruppe abgelegt. Für Teilnehmer 2 sind dies die Teilnehmer 4 und 5, für Teilnehmer 3 ist dies Teilnehmer 6.

Teilnehmer 2 versendet Fehlernachrichten an die Teilnehmer 4 und 5. Diese erstellen daraufhin auf den Teilnehmer 2 gerichtete Diagnosezeiger. Teilnehmer 3 versendet eine Fehlernachricht an den Teilnehmer 6. Dieser erstellt daraufhin einen auf den Teilnehmer 3 gerichteten Diagnosezeiger. Die Diagnosezeiger der Teilnehmer 4, 5 und 6 sind mit den Diagnosezeigern der jeweils übergeordneten Teilnehmer 2 bzw. 3 kaskadierbar und verweisen somit indirekt auf den Teilnehmer 1.

Bei einer späteren Fehlersuche ist beim Auslesen des Fehlerspeichers 10 des Teilnehmers 1 ein entsprechender Fehlereintrag vorhanden. Beim Auslesen oder dem Versuch des Auslesens eines Fehlerspeichers der Teilnehmer 2, 3, 4, 5, 6 oder 7, also aller übrigen Mitglieder der funktionsspezifischen Gruppe, wird durch einen oder mehrere kaskadierte Diagnosezeiger auf den Teilnehmer 1 verwiesen. Das schnelle und unkomplizierte Auffinden des Fehlereintrags bei Teilnehmer 1 wird somit unabhängig vom Startpunkt der Fehlersuche gewährleistet.

## Patentansprüche

1. Verfahren zur strukturierten Speicherung von Fehlereinträgen der Teilnehmer (1 , 2, 3, 4, 5, 6, 7) eines Datenbusses (8) in einem Kraftfahrzeug, wobei beim Auftreten eines Fehlers (9) eine von dem Fehler (9) möglicherweise beeinflusste Funktion und die Mitglieder einer zugehörigen funktionsspezifischen Gruppe diagnoserelevanter Teilnehmer (1, 2, 3, 4, 5, 6, 7) bestimmt werden, bei einem ersten Mitglied der funktionsspezifischen Gruppe ein Fehlereintrag erstellt wird, **dadurch gekennzeichnet, dass** bei einem zweiten Mitglied der funktionsspezifischen Gruppe ein auf das erste Mitglied verweisender Diagnosezeiger abgelegt wird, und dass einer funktionsspezifischen Gruppe ein Teilnehmer (7) als Mitglied zugeordnet wird, der in der aktuellen Konfiguration des Kraftfahrzeugs nicht an der die funktionsspezifische Gruppe begründenden Funktion beteiligt ist und der in einer früheren Konfiguration des Kraftfahrzeugs oder in einem anderen Kraftfahrzeugtyp an derselben oder einer ähnlichen Funktion beteiligt war/ist.

2. Verfahren nach Anspruch 1, **dadurch gekennzeichnet, dass** von dem ersten Mitglied eine Fehlernachricht an das zweite Mitglied ausgegeben und der Diagnosezeiger beim zweiten Mitglied auf die Fehlernachricht des ersten Mitglieds hin erstellt wird.

3. Verfahren nach einem der Ansprüche 1 oder 2, **dadurch gekennzeichnet, dass** bei einem dritten Mitglied der funktionsspezifischen Gruppe ein auf das zweite Mitglied verweisender Diagnosezeiger erstellt wird, der mit dem Diagnosezeiger des zweiten Mitglieds kaskadierbar ist.

4. Verfahren nach einem der Ansprüche 1 bis 3, **dadurch gekennzeichnet, dass** von dem zweiten Mitglied eine Fehlernachricht an das dritte Mitglied ausgegeben und der Diagnosezeiger des dritten Mitglieds auf die Fehlernachricht des zweiten Mitglieds hin erstellt wird.

5. Verfahren nach einem der Ansprüche 1 bis 4, **dadurch gekennzeichnet, dass** bei sämtlichen Mitgliedern einer funktionsspezifischen Gruppe entweder ein Fehlereintrag oder ein, ggf. kaskadiert, auf ein Mitglied mit Fehlereintrag verweisender Diagnosezeiger erstellt wird.

## Claims

1. A method for the structured storage of error entries for the users (1, 2, 3, 4, 5, 6, 7) of a data bus (8) in a motor vehicle, wherein, if an error (9) occurs, a function that might be influenced by the error (9) and the members of an associated function-specific group of users (1, 2, 3, 4, 5, 6, 7) that are relevant to the diagnostic process are determined and an error entry is prepared at a first member of the function-specific group, **characterised in that** a diagnostic pointer referring to the first member is stored at a second member of the function-specific group, and **in that** a user (7) which is not involved in the function founding the function-specific group in the current configuration of the motor vehicle and which was/is involved in the same or a similarfunction in an earlier configuration of the motor vehicle or in another motor vehicle type is assigned as member to a function-specific group.

2. A method according to claim 1, **characterised in that** an error message is output from the first member to the second member and the diagnostic pointer is prepared at the second member upon the error message of the first member.

3. A method according to either one of claims 1 or 2, **characterised in that** a diagnostic pointer referring to the second member is prepared at a third member of the function-specific group and can be cascaded with the diagnostic pointer of the second member.

4. A method according to any one of claims 1 to 3, **characterised in that** an error message is output from the second member to the third member and the diagnostic pointer of the third member is prepared upon the error message of the second member.

5. A method according to any one of claims 1 to 4, **characterised in that** either an error entry or a diagnostic pointer referring to a member with error entry and cascaded as appropriate is prepared at all members of a function-specific group.

## Revendications

1. Procédé de mise en mémoire structurée de messages d'erreur des participants (1, 2, 3, 4, 5, 6, 7) d'un bus de données (8) dans un véhicule, selon lequel en cas d'apparition d'une erreur (9), une fonction pouvant être influencée par l'erreur (9), et les membres d'un groupe spécifique à la fonction associé de participants pertinents pour le diagnostic (1, 2, 3, 4, 5, 6, 7) sont déterminés, et pour un premier membre du groupe spécifique à la fonction, un messager d'erreur est créé, **caractérisé en ce que**
pour un second membre du groupe spécifique à la fonction, un marqueur de diagnostic se référant au premier membre est déposé, et, à un groupe spécifique à la fonction, est associé en tant que membre un participant (7), qui dans la configuration actuelle du véhicule ne participe pas à la fonction sur laquelle est basée le groupe spécifique à la fonction, et, qui a été ou est impliqué dans la fonction ou dans une fonction similaire dans une configuration antérieure du véhicule ou dans un autre type de véhicule.

2. Procédé conforme à la revendication 1,
**caractérisé en ce qu'**
une information d'erreur est délivrée au second membre par le premier membre, et le marqueur de diagnostic est créé au niveau du second membre à partir de l'information d'erreur du premier membre.

3. Procédé conforme à l'une des revendications 1 et 2,
**caractérisé en ce que**
pour un troisième membre du groupe spécifique à la fonction un marqueur de diagnostic se référant au second membre est créé, ce marqueur de diagnostic pouvant être mis en cascade avec le marqueur de diagnostic du second membre.

4. Procédé conforme à l'une des revendications 1 à 3,
**caractérisé en ce qu'**
une information d'erreur est délivrée par le second membre au troisième membre, et le marqueur de diagnostic du troisième membre est créé à partir de l'information d'erreur du second membre.

5. Procédé conforme à l'une des revendications 1 à 4,
**caractérisé en ce que**
pour tous les membres d'un groupe spécifique à la fonction est créé soit un message d'erreur, soit un marqueur de diagnostic le cas échéant mis en cascade se référant à un membre avec un message d'erreur.
